# EUROPÄISCHE PATENTSCHRIFT

(11) **EP 2 143 982 B1**
(45) Veröffentlichungstag und Bekanntmachung des Hinweises auf die Patenterteilung: **13.03.2013**
(21) Anmeldenummer: 09000115.7
(22) Anmeldetag: 08.01.2009
(51) Int. Cl.: F16J 15/06, G01L 5/24

(54) **Dichtungsanordnung für eine Flanschverbindung**
Seal assembly for a flange connection
Agencement d'étanchéité pour une bride de liaison

(30) Priorität: 11.07.2008 DE 202008009317 U
(43) Veröffentlichungstag der Anmeldung: 13.01.2010
(73) Patentinhaber: Kempchen Leuna GmbH, 06237 Leuna (DE)
(72) Erfinder: Zellner, Norbert, 06246 Bad Lauchstädt (DE)
(74) Vertreter: Albrecht, Rainer Harald

(56) Entgegenhaltungen:
- US-A- 5 222 399
- US-A1- 2003 042 688
- US-A1- 2007 193 361

## Beschreibung

Die Erfindung betrifft eine Dichtungsanordnung für eine Flanschverbindung gemäß dem Oberbegriff des Patentanspruchs 1.

Im verfahrenstechnischen Anlagenbau werden an die Zuverlässigkeit von Dichtungsanordnungen hohe Anforderungen gestellt. Dabei sind sowohl die Dichtungsmaterialien als auch die Flansche großen statischen Drücken und Temperaturen ausgesetzt. Um eine den Anforderungen entsprechende Dichtungswirkung zu erzielen, muss eine definierte Flächenpressung der Dichtungsfläche bei der Montage gewährleistet sein. Diese wird derzeit bei allen eingesetzten Dichtungsanordnungen über die erforderliche Schraubenkraft theoretisch ermittelt und über das daraus errechnete Schraubenanzugsmoment in die Flanschverbindung eingebracht. Eine gesicherte Aussage über die tatsächlich vorhandene Flächenpressung der Dichtungsfläche ist aus der Vielzahl der Einflussfaktoren, die in die Flanschverbindung eingehen, nicht möglich.

Aus DE 44 23 893 C2 ist eine Dichtungsanordnung mit einer Kupferfolie bekannt, die durch geätzte Kanäle in Leiterbahnen aufgeteilt und durch Deckschichten abgedeckt ist. Zur Erkennung von Leckagen kann vorgesehen sein, die Leiterbahnen der Kupferfolie mit den abzudichtenden metallischen Flanschflächen nach Art eines Plattenkondensators zu betreiben. Des Weiteren können die Leiterbahnen der Kupferfolie zur Kontaktierung eines integrierten Sensorchips genutzt werden. Um den auf die Flachdichtung wirkenden Druck zu bestimmen, ist zusätzlich eine piezoelektrische Sensorfolie vorgesehen. Aus der DE 44 23 893 C2 ist des Weiteren bekannt, zwischen zwei Leiterplatten mit jeweils zwischen Deckschichten angeordneten Leiterbahnen eine metallische Einlage, die einen Träger bildet, vorzusehen. Die beiden Leiterplatten werden im Rahmen einer solchen Ausgestaltung als getrennte Sensorelemente genutzt.

Die Druckschrift DE 30 06 656 A1 betrifft eine Dichtung mit Druckgeberfunktion, wobei ein Drucksensor mit zwei Elektrodenschichten und einem dazwischen angeordneten Dielektrikum vorgesehen ist. Bei einer Kompression der Dichtung werden aufgrund von Kapazitätsänderungen Spannungsdifferenzen erzeugt, die verstärkt und ausgewertet werden. Da lediglich Druckänderungen aufgenommen werden, erfolgt die Bestimmung der Flächenpressung mit einer geringen Genauigkeit, wobei insbesondere langsame Änderungen und der Absolutwert der Flächenpressung nicht zuverlässig bestimmt werden können.

Aus den Druckschriften DE 103 05 110 B3 und DE 103 43 498 A1 sind Dichtungsanordnungen für Flanschverbindungen bekannt, die jeweils eine Vielzahl von integrierten, dielektrischen Messsensoren aufweisen, die in Umfangrichtung in einer gleichmäßigen Winkelteilung angeordnet sind. Da eine Vielzahl von getrennten Sensoren bereitgehalten und in die Dichtung integriert werden müssen, ist die Herstellung aufwendig.

Aus den Druckschriften DE 41 01 871 A1 und WO 94/11718 sind des Weiteren Dichtungsanordnungen bekannt, bei denen die Bestimmung der Flächenpressung mittels piezoelektrischen Elementen erfolgt.

Eine gattungsgemäße Dichtungsanordnung mit den Merkmalen des Oberbegriffes des Patentanspruchs 1 ist aus der US 2007/0193361 A1 bekannt. Die aus ebenen Schichten gebildete Dichtungsanordnung weist unterhalb der außen liegenden Weichstoffauflagen eine Elektrode und eine Gegenelektrode auf, die mit einer dielektrischen Zwischenlage einen Sensor bilden. Die Elektrode und die Gegenelektrode sind als dünne metallische Schichten ausgebildet.

Der grundsätzliche Aufbau einer üblichen Dichtungsanordnung für eine Flanschverbindung mit einer metallischen Einlage und Weichstoffauflagen ist aus der DE 20 2006 000 726 U1 bekannt, wobei die metallische Einlage einen Träger der Dichtung bildet und insbesondere die Form eines Wellrings aufweist.

Der vorliegenden Erfindung liegt die Aufgabe zugrunde, eine Dichtungsanordnung für eine Flanschverbindung anzugeben, die einfach zu fertigen ist und dennoch eine genaue Bestimmung der Flächenpressung ermöglicht.

Gegenstand der Erfindung und Lösung der Aufgabe ist eine Dichtungsanordnung gemäß Patentanspruch 1. Erfindungsgemäß ist damit die Dichtungsanordnung nicht mit einem separat eingelegten Sensor ausgebildet. Vielmehr bildet die metallische Einlage in Form des Wellrings als Gegenelektrode einen Teil der gesamten Messeinrichtung zur Bestimmung der Flächenpressung. Vorzugsweise ist der Schaltungsträger flexibel.

Mit der erfindungsgemäßen Anordnung kann während und jederzeit nach dem Einbau der Dichtung die an der Dichtungsfläche wirkende Flächenpressung gemessen werden. Wird dabei festgestellt, dass die Flächenpressung von einem Vorgabewert abweicht oder die Flächenpressung in Umfangsrichtung der Dichtung nicht gleichmäßig ist, können die Schrauben der Flanschverbindung gezielt nachgezogen und die Kraftverteilung in der Flanschverbindung korrigiert werden. Die erfindungsgemäße Dichtungsanordnung ist von besonderem Vorteil bei Flanschen mit großen Durchmessern, z. B. bei verfahrenstechnischen Apparaten, und gewährleistet auch bei schwierigen Anwendungen eine gute Abdichtung an den Flanschen einer Flanschverbindung.

Gemäß einer vorteilhaften Ausgestaltung der erfindungsgemäßen Dichtungsanordnung weist die Flächenelektrode mindestens zwei, vorzugsweise vier Partitionen auf, wobei die Partitionen über Leiterbahnen, die auf dem Schaltungsträger angeordnet sind, an einer Schnittstelle angeschlossen sind. Die Partitionen sind vorzugsweise identisch ausgebildet und in Umfangsrichtung in gleichmäßigen Abständen angeordnet. Durch die Aufteilung der Flächenelektrode in mehrere Partitionen, ist es möglich, die Flächenpressung in jeder einzelnen Partition zu überwachen. Auf diese Weise lässt sich auf einfache Weise feststellen, ob die Flächenpressung in Umfangsrichtung gleichmäßig ist. Bei einer ungleichmäßigen Verteilung der Flächenpressung lassen sich Korrekturen an der Flanschverbindung gezielt einleiten.

Die Flächenelektrode des Schaltungsträgers besteht insbesondere aus einer auf die dielektrische Trägerschicht aufgebrachten metallischen Beschichtung. Als Beschichtungsmaterialien kommen vorzugsweise Silber oder Silberlegierungen in Betracht.

Der Schaltungsträger weist eine Schnittstelle auf, über die elektrische Größen abfragbar sind. Die Schnittstelle ist vorzugsweise außerhalb der Weichstoffauflagen angeordnet und ist zweckmäßig mit Anschlusselementen für eine Steckverbindung ausgestattet. Die Flächenelektrode sowie die Gegenelektrode können beispielsweise mit einer Spannung versorgt werden und es ist möglich, die Änderung einer physikalischen Größe, beispielsweise des elektrischen Stroms oder der Kapazität, zu messen.

Der Schaltungsträger kann ferner elektronische Bauteile umfassen, die vorzugsweise im Bereich der Schnittstelle angeordnet sind. Zu diesen Bauteilen können beispielsweise Kapazitäten oder Widerstände gehören, welche zur Impedanzanpassung im Hinblick auf eine fehlerfreie Signalübertragung an ein an der Schnittstelle angeschlossenes Gerät erforderlich sind.

Die metallische Einlage ist erfindungsgemäß als Wellring ausgebildet. Der Wellring ist aus Blech gefertigt und weist im radialen Schnitt ein wellenförmiges oder zickzackförmiges Profil auf. Die metallische Einlage ist zweckmäßig mit einer elektrisch leitenden Kontaktfläche des Schaltungsträgers verbunden, wobei die Kontaktfläche mittels einer Leiterbahn an die Schnittstelle angeschlossen sein kann. Bei einer Ausgestaltung als Wellring ergibt sich der Vorteil, dass bei einer Erhöhung der Flächenpressung das wellenförmige oder zackenförmige Profil zusammengedrückt wird. Da das Blech des Wellrings im Rahmen der Erfindung als Gegenelektrode der kapazitiven Messeinrichtung wirkt, werden dabei besonders große Kapazitätsänderungen beobachtet.

Beidseitige Weichstoffauflagen der Dichtungsanordnung bestehen aus für Flanschdichtungen üblichen Dichtungswerkstoffen, z. B. Faserwerkstoff oder Graphit oder einem Fluorpolymer. Die Weichstoffauflagen können aus einem Dichtungsmaterial bestehen oder gemäß einer bevorzugten Ausführung der Erfindung eine Ummantelung bilden. Insbesondere bevorzugt ist eine Ummantelung aus einem Fluorpolymer. Eine derartige Ummantelung zeichnet sich nicht nur durch eine gute Dichtungswirkung aus, sondern bildet auch einen wirksamen Schutz des Schaltungsträgers. Lediglich im Bereich der Schnittstelle an der Außenseite der Dichtung mag es zweckmäßig sein, dass die Ummantelung dort eine Öffnung aufweist und die Schnittstelle vorsteht, um ein elektronisches Gerät zur Messwerterfassung leicht anschließen zu können.

Die erfindungsgemäße Dichtungsanordnung entspricht den Anforderungen einer hochwertigen Dichtung und erfüllt ohne weiteres die einschlägigen Normen, insbesondere der TA-Luft. Sie zeichnet sich dadurch aus, dass die auf die Dichtfläche wirkende Flächenpressung durch eine in der Dichtungsanordnung integrierte Messeinrichtung, welche nach einem kapazitiven Verfahren arbeitet, erfasst wird. Die Messwerte sind über eine Schnittstelle und eine elektronische Auswerteeinheit übertragbar.

Im Folgenden wird die Erfindung anhand einer lediglich ein Ausführungsbeispiel darstellenden Zeichnung erläutert. Es zeigen schematisch:
- **Fig. 1**: ausschnittsweise einen radialen Schnitt durch eine Dichtungsan- ordnung in einer Flanschverbindung,
- **Fig. 2**: einen horizontalen Schnitt durch die Dichtungsanordnung in der Schnittebene A-A aus Fig. 1 und
- **Fig. 3**: ausschnittsweise eine weitere Ausgestaltung der erfindungsge- mäßen Dichtungsanordnung im Radialschnitt.

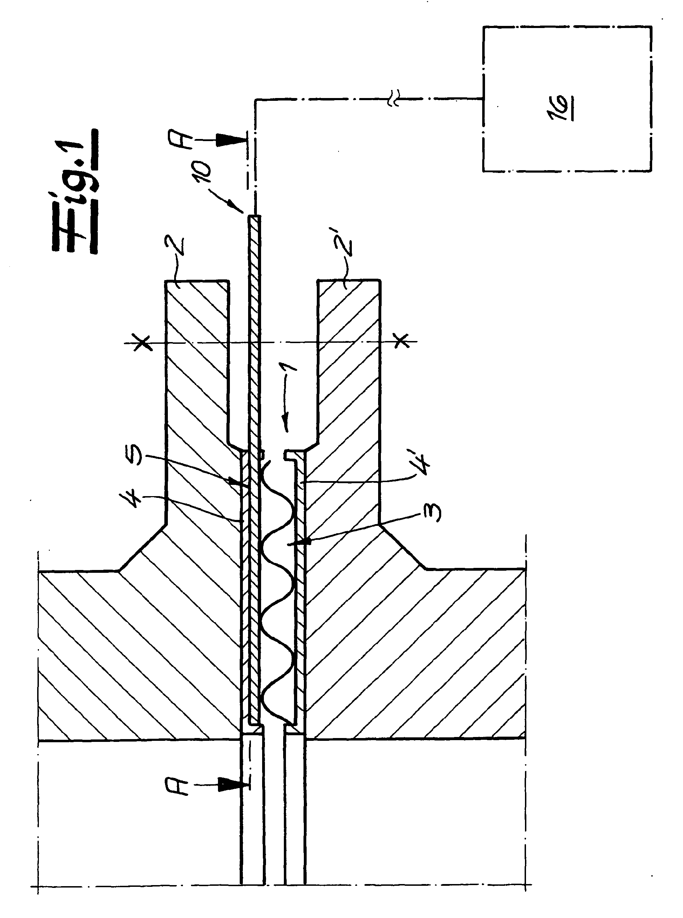

In Fig. 1 ist eine Dichtungsanordnung 1 zwischen den Flanschen 2, 2' einer Flanschverbindung dargestellt. Die Dichtungsanordnung 1 umfasst eine metallische Einlage 3 sowie Weichstoffauflagen 4, 4', die eine Dichtungsfläche bilden. Zwischen der Einlage 3 und einer der Weichstoffauflagen 4 ist ein Schaltungsträger 5 zur Erfassung einer auf die Dichtungsfläche wirkenden Flächenpressung angeordnet.

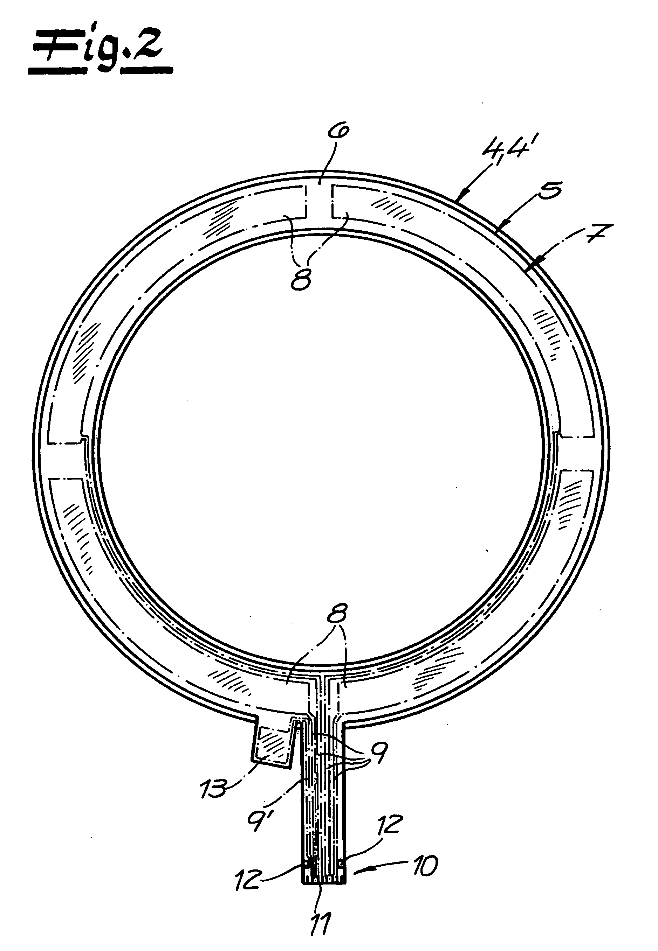

Einer vergleichenden Betrachtung der Fig. 1 und 2 entnimmt man, dass der Schaltungsträger 5 eine Trägerschicht 6 aus einem dielektrischen Material sowie einer auf der Trägerschicht angeordnete elektrisch leitfähige Flächenelektrode 7 aufweist. Der Schaltungsträger 5 bildet mit der metallischen Einlage 3 eine kapazitive Messeinrichtung, wobei die Einlage 3 als Gegenelektrode wirkt. Der Schaltungsträger 5 ist flexibel.

Der Draufsicht auf den Schaltungsträger 5 in Fig. 2 ist zu entnehmen, dass die Flächenelektrode 7 im Ausführungsbeispiel vier Partitionen 8 aufweist, die identisch ausgebildet und in Umfangsrichtung in gleichmäßigen Abständen angeordnet sind. Die Partitionen 8 sind über Leiterbahnen 9 an eine Schnittstelle 10 angeschlossen, die außerhalb der Weichstoffauflagen 4, 4' und damit außerhalb der eigentlichen Dichtung angeordnet ist und mit Anschlusselementen 11 für eine Steckverbindung ausgestattet ist. An der Schnittstelle 10 ist eine elektronische Auswerteeinheit 16 zur Datenerfassung und Verarbeitung anschließbar. Der Träger 5 kann ferner elektronische Bauteile 12 umfassen, die eine verbesserte Signal- und Datenübertragung ermöglichen.

Die Flächenelektrode 7 des Schaltungsträgers 5 besteht aus einer auf die dielektrische Trägerschicht 6 aufgebrachten metallischen Beschichtung. Bevorzugtes Beschichtungsmaterial ist Silber oder eine Silberlegierung.

Die metallische Einlage 3 ist als Wellring ausgebildet und mit einer elektrisch leitenden Kontaktfläche 13 des Schaltungsträgers verbunden. Der Darstellung in Fig. 2 entnimmt man, dass die Kontaktfläche 13 ebenfalls mittels einer Leiterbahn 9' an die Schnittstelle 10 angeschlossen ist.

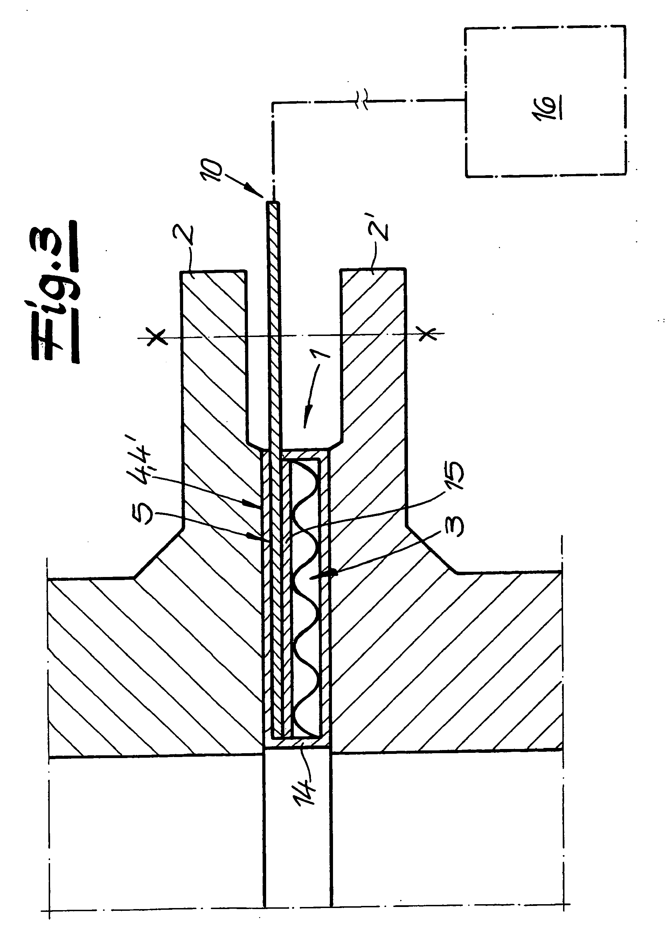

Im Ausführungsbeispiel der Fig. 3 bilden die Weichstoffauflagen 4, 4' eine Ummantelung 14, die vorzugsweise aus einem Fluorpolymer besteht. Ferner ist in dem in Fig. 3 dargestellten Ausführungsbeispiel zwischen dem Schaltungsträger 5 und der metallischen Einlage 3 eine zusätzliche Trennschicht 15 aus einem dielektrischen Material angeordnet.

Mittels der in der Dichtungsanordnung 1 integrierten Sensorik ist es möglich, die Flächenpressung einer Dichtungsfläche im eingebauten Zustand der Dichtung zu ermitteln. Die Messwerte können von einer an die Schnittstelle 10 angeschlossenen elektronischen Auswerteeinheit 16 erfasst, verarbeitet, weitergeleitet und in der gewünschten Maßeinheit angezeigt werden. Zweckmäßig ist die Auswerteeinheit 16 mobil, so dass sie an einer Vielzahl von Dichtungsanordnungen 1 eingesetzt werden kann.

Mit der erfindungsgemäßen Dichtungsanordnung 1 können Kosteneinsparungen bei der Montage, der Inbetriebnahme und beim Betreiben verfahrenstechnischer Anlagen, z. B. durch eine höhere Verfügbarkeit, erzielt werden. Darüber hinaus sind kostengünstig flexible und an spezifische Anforderungen anpassbare Dichtungsformen bzw. Dichtungsgrößen realisierbar.

## Patentansprüche

1. Dichtungsanordnung (1) für eine Flanschverbindung mit Weichstoffauflagen (4, 4'), die eine Dichtfläche bilden, einer elektrisch leitfähigen Flächenelektrode (7) und einer Gegenelektrode, wobei die Flächenelektrode (7) auf einer Trägerschicht (6) aus dielektrischem Material angeordnet ist und zusammen mit dieser einen Schaltungsträger (5) bildet, der zur Erfassung einer auf die Dichtflächen wirkenden Flächenpressung zwischen der Gegenelektrode und einer der Weichstoffauflagen (4) angeordnet ist, und wobei der Schaltungsträger (5) mit der Gegenelektrode eine kapazitive Messeinrichtung bildet, **dadurch gekennzeichnet, dass** als Gegenelektrode eine als Wellring ausgebildete metallische Einlage (3) vorgesehen ist.

2. Dichtungsanordnung nach Anspruch 1, **dadurch gekennzeichnet, dass** der Schaltungsträger (5) flexibel ist.

3. Dichtungsanordnung nach Anspruch 1 oder 2, **dadurch gekennzeichnet, dass** die Flächenelektrode (7) mindestens zwei Partitionen (8) aufweist, die über Leiterbahnen (9) an eine Schnittstelle (10) angeschlossen sind.

4. Dichtungsanordnung nach Anspruch 3, **dadurch gekennzeichnet, dass** die Partitionen (8) identisch ausgebildet und in Umfangsrichtung in gleichmäßigen Abständen angeordnet sind.

5. Dichtungsanordnung nach einem der Ansprüche 1 bis 4, **dadurch gekennzeichnet, dass** die Flächenelektrode (7) des Schaltungsträgers (5) aus einer auf die dielektrische Trägerschicht (6) aufgebrachten metallischen Beschichtung, vorzugsweise aus Silber oder einer Silberlegierung, besteht.

6. Dichtungsanordnung nach einem der Ansprüche 1 bis 5, **dadurch gekennzeichnet, dass** der Schaltungsträger (5) eine Schnittstelle (10) aufweist, über die elektrische Größen abfragbar sind.

7. Dichtungsanordnung nach Anspruch 6, **dadurch gekennzeichnet, dass** die Schnittstelle (10) außerhalb der Weichstoffauflagen (4, 4') angeordnet ist.

8. Dichtungsanordnung nach Anspruch 6 oder 7, **dadurch gekennzeichnet, dass** die Schnittstelle (10) Anschlusselemente (11) für eine Steckverbindung aufweist.

9. Dichtungsanordnung nach Anspruch 8, **dadurch gekennzeichnet, dass** der Schaltungsträger (5) elektronische Bauteile (12) umfasst, welche vorzugsweise im Bereich der Schnittstelle (10) angeordnet sind.

10. Dichtungsanordnung nach einem der Ansprüche 1 bis 9, **dadurch gekennzeichnet, dass** die metallische Einlage (3) mit einer elektrisch leitenden Kontaktfläche (13) des Schaltungsträgers (5) verbunden ist, wobei die Kontaktfläche (13) mittels einer Leiterbahn (9') an die Schnittstelle (10) angeschlossen ist.

11. Dichtungsanordnung nach einem der Ansprüche 1 bis 10, **dadurch gekennzeichnet, dass** die Weichstoffauflagen (4, 4') eine Ummantelung (14) bilden.

12. Dichtungsanordnung nach Anspruch 11, **dadurch gekennzeichnet, dass** die Ummantelung (14) aus einem Fluorpolymer besteht.

13. Dichtungsanordnung nach einem der Ansprüche 1 bis 12, **dadurch gekennzeichnet, dass** zwischen dem Schaltungsträger (5) und der metallischen Einlage (3) und/oder zwischen dem Schaltungsträger (5) und der benachbarten Weichstoffauflage (4) eine Trennschicht (15) aus einem dielektrischen Material angeordnet ist.

## Claims

1. A sealing arrangement (1) for a flange connection with soft material layers (4, 4'), which form a sealing surface, and an electrically conductive surface electrode (7) and a counter electrode, wherein
the surface electrode (7) is arranged on a supportive layer (6) of dielectric material, and together with the latter forms a circuit substrate (5), which is arranged so as to register a surface pressure acting on the sealing surfaces between the counter electrode and one of the soft material layers (4), and wherein
the circuit substrate (5) forms with the counter electrode a capacitive measuring device,
**characterised in that**,
a metallic inlay (3) designed as a corrugated ring is provided as a counter electrode.

2. The sealing arrangement in accordance with Claim 1,
**characterised in that**,
the circuit substrate (5) is flexible.

3. The sealing arrangement in accordance with Claim 1 or 2,
**characterised in that**,
the surface electrode (7) has at least two partitions (8), which are connected via conducting tracks (9) to an interface (10).

4. The sealing arrangement in accordance with Claim 3,
**characterised in that**,
the partitions (8) are of identical design, and are arranged at equal distances in the circumferential direction.

5. The sealing arrangement in accordance with one of the Claims 1 to 4,
**characterised in that**,
the surface electrode (7) of the circuit substrate (5) consists of a metallic coating applied onto the dielectric supportive layer (8), preferably of silver or a silver alloy.

6. The sealing arrangement in accordance with one of the Claims 1 to 5,
**characterised in that**,
the circuit substrate (5) has an interface (10), via which electrical quantities can be interrogated.

7. The sealing arrangement in accordance with Claim 6,
**characterised in that**,
the interface (10) is arranged outboard of the soft material layers (4,4').

8. The sealing arrangement in accordance with Claim 6 or 7,
**characterised in that**,
the interface (10) has connection elements (11) for a plug connection.

9. The sealing arrangement in accordance with Claim 8,
**characterised in that**,
the circuit substrate (5) comprises electronic components (12), which are preferably arranged in the region of the interface (10).

10. The sealing arrangement in accordance with one of the Claims 1 to 9,
**characterised in that**,
the metallic inlay (3) is connected with an electrically conducting contact surface (13) of the circuit substrate (5), wherein
the contact surface (13) is connected by means of a conducting track (9') to the interface (10).

11. The sealing arrangement in accordance with one of the Claims 1 to 10,
**characterised in that**,
the soft material layers (4, 4') form an encasement (14).

12. The sealing arrangement in accordance with Claim 11,
**characterised in that**,
the encasement (14) consists of a fluoropolymer.

13. The sealing arrangement in accordance with one of the Claims 1 to 12,
**characterised in that**,
a separating layer (15) of a dielectric material is arranged between the circuit substrate (5) and a metallic inlay (3), and/or between the circuit substrate (5) and the adjacent soft material layer (4).

## Revendications

1. Agencement d'étanchéité (1) pour une liaison à bride avec des couches en matériau tendre (4, 4') qui forment une surface d'étanchéité, une électrode de surface électroconductrice (7) et une contre électrode, l'électrode de surface (7) étant disposée sur une couche de support (6) en un matériau diélectrique et formant ensemble avec celle-ci un support de circuit (5), lequel est disposé entre la contre électrode et l'une des couches en matériau tendre (4) pour la détection d'une pression de surface s'exerçant sur les surfaces d'étanchéité, et le support de circuit (5) formant avec la contre électrode un dispositif de mesure capacitif, **caractérisé en ce que** l'on prévoit en guise de contre électrode un insert métallique (3) réalisé en tant que bague ondulée.

2. Agencement d'étanchéité selon la revendication 1, **caractérisé en ce que** le support de circuit (5) est flexible.

3. Agencement d'étanchéité selon la revendication 1 ou 2, **caractérisé en ce que** l'électrode de surface (7) présente au moins deux partitions (8), lesquelles sont raccordées via des pistes conductrices (9) à une interface (10).

4. Agencement d'étanchéité selon la revendication 3, **caractérisé en ce que** les partitions (8) sont réalisées de manière identique et sont disposées en direction circonférentielle à intervalles réguliers.

5. Agencement d'étanchéité selon l'une des revendications 1 à 4, **caractérisé en ce que** l'électrode de surface (7) du support de circuit (5) se compose d'un revêtement métallique appliqué sur la couche de support diélectrique (6), de préférence en argent ou un alliage à base d'argent.

6. Agencement d'étanchéité selon l'une des revendications 1 à 5, **caractérisé en ce que** le support de circuit (5) présente une interface (10), par l'intermédiaire de laquelle les grandeurs électriques peuvent être consultées.

7. Agencement d'étanchéité selon la revendication 6, **caractérisé en ce que** l'interface (10) est disposée à l'extérieur des couches en matériau tendre (4, 4').

8. Agencement d'étanchéité selon la revendication 6 ou 7, **caractérisé en ce que** l'interface (10) présente des éléments de raccordement (11) pour une connexion à fiche.

9. Agencement d'étanchéité selon la revendication 8, **caractérisé en ce que** le support de circuit (5) comprend des composants électroniques (12), lesquels sont de préférence disposés dans la zone de l' interface (10).

10. Agencement d'étanchéité selon l'une des revendications 1 à 9, **caractérisé en ce que** l'insert métallique (3) est en liaison avec une surface de contact électroconductrice (13) du support de circuit (5), la surface de contact (13) étant raccordée à l'interface (10) à l'aide d'une piste conductrice (9').

11. Agencement d'étanchéité selon l'une des revendications 1 à 10, **caractérisé en ce que** les couches en matériau tendre (4, 4') forment une enveloppe (14).

12. Agencement d'étanchéité selon la revendication 11, **caractérisé en ce que** l'enveloppe (14) se compose d'un fluoropolymère.

13. Agencement d'étanchéité selon l'une des revendications 1 à 12, **caractérisé en ce qu'**entre le support de circuit (5) et l'insert métallique (3) et/ou entre le support de circuit (5) et la couche en matériau tendre (4) voisine, une couche de séparation (15) en un matériau diélectrique est disposée.
